# EUROPÄISCHE PATENTSCHRIFT

(11) **EP 0 338 056 B1**
(45) Veröffentlichungstag und Bekanntmachung des Hinweises auf die Patenterteilung: **26.01.1994**
(21) Anmeldenummer: 88909284.7
(22) Anmeldetag: 24.10.1988
(51) Int. Cl.: C02F 1/02, F24D 17/00, F24D 19/10

(54) **EINRICHTUNG ZUR VERHINDERUNG DES AUFTRETENS BZW. DER FORTPFLANZUNG VON KLEINSTLEBEWESEN IN BRAUCHWASSER**
APPARATUS FOR PREVENTION OF THE OCCURENCE OR PROLIFERATION OF MICROORGANISMS IN WATER FOR INDUSTRIAL USE
INSTALLATION POUR EMPECHER L'APPARITION OU LA MULTIPLICATION DES MICRO-ORGANISM DANS LES SYSTEMES D'ALIMENTATION EN EAU

(30) Priorität: 23.10.1987 AT 2814/87; 03.11.1987 AT 2895/87; 03.11.1987 AT 2897/87; 07.12.1987 AT 3214/87; 07.12.1987 AT 3215/87; 11.12.1987 AT 3263/87; 15.03.1988 AT 694/88
(43) Veröffentlichungstag der Anmeldung: 25.10.1989
(73) Patentinhaber: Joh. Vaillant GmbH u. Co., 42810 Remscheid (DE); n.v. Vaillant s.a., 1620 Drogenbos (BE); VAILLANT S.A.R.L, 94537 Rungis Cedex (FR); VAILLANT Ges.m.b.H, 1233 Wien (AT); Vaillant Ltd., Rochester Kent ME2 4EZ (GB); Vaillant B.V., 1105 BJ Amsterdam (NL); Vaillant GmbH, 8953 Dietikon 1 (CH)
(72) Erfinder: BECHEM, Herbert, D-5600 Wuppertal 23 (DE); BOSE, Alfred, D-5600 Wuppertal 2 (DE); KEHL, Reinhold, D-5632 Wermelskirchen (DE); RATHERT, Roland, D-5630 Remscheid 11 (DE); SCHILLING, Jürgen, D-5632 Wermelskirchen (DE); TENHUMBERG, Jürgen, D-5608 Radevormwald (DE); UCKELMANN, Winfried, D-5632 Wermelskirchen (DE)
(74) Vertreter: Heim, Johann-Ludwig, Dipl.-Ing.
(86) Internationale Anmeldenummer: DE8800661
(87) Internationale Veröffentlichungsnummer: WO8903807

(56) Entgegenhaltungen:
- EP-A- 0 183 968
- EP-A- 0 270 993
- DE-A- 2 460 067
- DE-A- 2 541 601
- DE-C- 1 007 256
- DE-C- 3 512 880
- GB-A- 2 146 797
- US-A- 3 212 566
- PATENT ABSTRACTS OF JAPAN, VOL. 11, NO. 250 (M-616) (2697), 14 AUGUST 1987, & JP, A, 6259339 (MATSUSHITA ELECTRIC IND. CO. LTD) 16 MARCH 1987

## Beschreibung

Die Erfindung betrifft eine Einrichtung zur Entkeimung von innerhalb einer einen mittels Wärmepumpe(n), Solarzelle(n) oder dergleichen Niedrigtemperatur-Wärmequelle(n) beheizbaren Speicherbehälter aufweisenden Brauchwasseranlage erwärmtem, an zumindest einer Zapfstelle abzugebendem Brauchwasser, wobei in der Zapfleitung ein Wärmetauscher angeordnet ist, der das ihn durchströmende Brauchwasser auf eine zur Entkeimung ausreichend hohe Temperatur beheizt, und wobei der Speicherbehälter und der Wärmetauscher mit von der gleichen Niedrigtemperatur-Wärmequelle erhitztem und in einer eine Umlaufpumpe enthaltende Umlaufleitung geführtem Wasser beheizbar sind.

Bei Brauchwasseranlagen mit oft sehr ausgedehnten Leitungsnetzen ergibt sich die Gefahr des Auftretens von Kleinstlebewesen, insbesondere der die sogenannte Legionärskrankheit verursachenden Bakterien (legionella pneumophila). Eine Entkeimung des Brauchwassers ist zwar, wie in der EP-OS 0 270 993 beschrieben, durch dessen Erhitzung auf eine Temperatur oberhalb 70 °C möglich, doch müßte zu einer wirksamen Entkeimung das gesamte Leitungssystem mit solchem Heißwasser durchspült werden.

Ein weiteres Problem besteht diesbezüglich darin, daß es Brauchwasseranlagen gibt, bei denen die zur Entkeimung eines großvolumigen Speichers bzw. eines ausgedehnten Leitungssystems erforderlichen Temperaturen von vornherein nicht erreichbar sind, z. B. bei durch Wärmepumpen oder Solarzellen beheizbaren Anlagen.

Aus der EP-OS 183 968 und der DE-OS 2 460 067 sind Vorrichtungen bekannt, die eine partielle Keimabtötung in der Zapfleitung eines Speichers ermöglichen. Dazu ist ein Wärmetauscher im Bereich der Zapfleitung vorgesehen. Gemäß der o. g. DE-OS erfolgt eine Fremdbeheizung der Zapfleitung mittels einer elektrischen Heizwendel, die die Zapfleitung umgibt. Die Wirksamkeit ist wegen des einmaligen Durchströmens des Brauchwasser durch die Zapfleitung sehr begrenzt. Die o. g. EP-OS betrifft eine Entkeimungsanlage, bei der eine einen Teil der Zapfleitung enthaltende Umlaufleitung mit einer Umlaufpumpe, dem Wärmetauscher, einem Bakterienfilter, einem zweiten Wärmetauscher zur Kühlung des umlaufenden oder zu zapfenden Wassers und dem Speicher vorgesehen ist. Da der Umlauf über den Speicher führt und sich im Speicher aufgrund der Kühlung durch den zweiten Wärmetauscher immer kaltes Wasser befindet, muß der Wärmetauscher eine große Heizleistung aufbringen.

Aufgabe der Erfindung ist es deshalb, eine Einrichtung für eine Brauchwasseranlage mit Wärmepumpen-, Solarzellen- oder dergleichen Niedrigtemperaturbetrieb anzugeben, die mit einem wirtschaftlich vertretbaren, vergleichsweise geringen Aufwand für weitgehende Keimfreiheit sorgt, und die Bekämpfung der Kleinstlebewesen in einer Weise ermöglicht, die keinen allzu hohen Energieaufwand erfordert, aber dennoch zuverlässige Ergebnisse zeitigt.

Erfindungsgemäß wird die Aufgabe dadurch gelöst, daß eine einen Teil der Zapfleitung enthaltende, den Speicherbehälter umgehende weitere Umlaufleitung mit einer Umlaufpumpe vorgesehen ist, die stromab des Wärmetauschers von der Zapfleitung ausgeht und in den vom Speicherbehälter zum Wärmetauscher führenden Abschnitt dieser Zapfleitung mündet. In dieser Umlaufleitung kann das zu entkeimende Wasser über eine beliebig lange Zeitspanne in Umlauf versetzt werden, so lange, bis es keimfrei ist. Durch die Beheizung des zusätzlichen Wärmetauschers mit der Niedrigtemperatur-Wärmequelle, die der Brauchwasserversorgungsanlage von vornherein angehört, ergibt sich ein einfacher Aufbau der Anlage und eine hohe Wirtschaftlichkeit ihres Betriebes. Da das Fassungsvermögen des Wärmetauschers üblicherweise sehr viel geringer ist als das des Speicherbehälters, erreicht der Wärmetauscher sekundärseitig eine viel höhere Temperatur als das Speicherwasser.

Um den Wärmetauscher ausreichend beheizen zu können, kann im Vorlauf der Niedrigtemperatur-Wärmequelle ein Dreiwegeventil angeordnet sein, von dem ein Leitungsstrang als Vorlauf zum Wärmetauscher und ein anderer Leitungsstrang als Vorlauf zu mindestens einem Heizkörper führt. Dies erschließt die Möglichkeit, zeitweise die Niedrigtemperatur-Wärmequelle vorwiegend für die Beheizung des Wärmetauschers einzusetzen.

Zur willkürlichen oder selbsttätigen Steuerung der Stellung des vorgenannten, im Vorlauf der Niedrigtemperatur-Wärmequelle angeordneten Dreiwegeventils ist - vorzugsweise im Bereich der Regelung der Niedrigtemperatur-Wärmequelle - eine Steuerung vorgesehen, die die Stellung des Dreiwegeventils, gegebenenfalls zeit- und/oder temperaturabhängig festlegt, etwa mit Hilfe eines dem Wärmetauscher zugeordneten Temperaturfühlers und/oder eines Zeitgliedes, z. B. einer Schaltuhr.

Eine andere Ausführungsform des Erfindungsgegenstandes bezieht sich auf einen Speicher mit einem Vorlauf und einem Rücklauf. Diese Ausführungsform zeichnet sich dadurch aus, daß die zur Verwirklichung des Erfindungsgedankens erforderlichen konstruktiven Maßnahmen minimal sind. Es bedarf lediglich eines im Vorlauf des Speicherbehälters angeordneten Ventils zur zeitweisen Sperre des Vorlaufs und eines im Rücklauf des Speicherbehälters angeordneten Rückschlagventils zur Verhinderung des Eintrittes von Umlaufwasser in das Innere des Speicherbehälters.

Nachstehend wird die erfindungsgemäße Einrichtung an Hand der Zeichnungen erläutert, die zwei verschiedene Ausführungsformen beispielsweise veranschaulichen. Es zeigen:
- Figur 1: eine Brauchwasseranlage mit einer erfindungsgemäßen Einrichtung einer ersten Ausführungsform und
- Figur 2: eine Variante einer solchen Einrichtung.

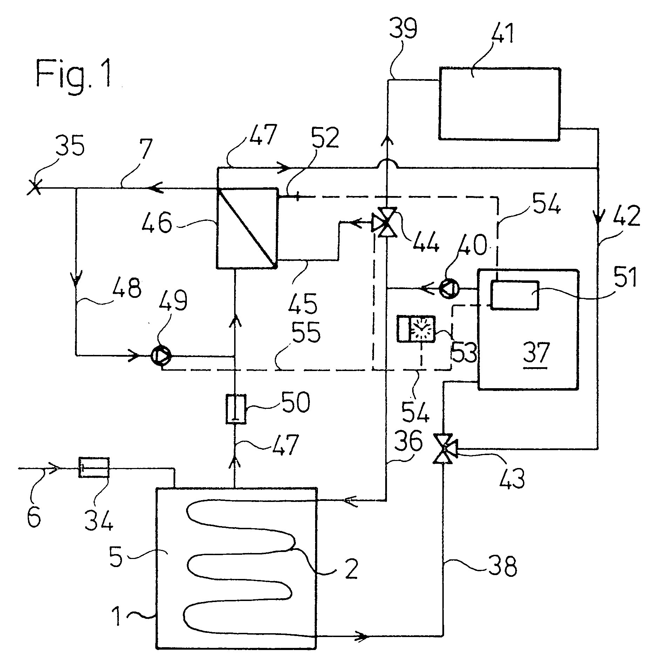

Bei der in Figur 1 dargestellten erfindungsgemäßen Einrichtung wird über eine Kaltwasserversorgungsleitung 6 und ein Rückschlagventil 34 ein Speicherbehälter 1 mit Brauchwasser versorgt, das nach seiner Erwärmung über die Warmwasser-Zapfleitung 7 einer Zapfstelle 35 zuströmt.

Der Speicherbehälter 1 enthält in seinem Inneren 5 zwecks Beheizung des Speicherwassers eine Heizwendel 2, die vom Vorlauf 36 einer Niedrigtemperatur-Wärmequelle 37, insbesondere auf Wärmepumpen- oder Solarzellenbasis, mit Heizwasser beschickt wird, das nach Wärmeabgabe und Abkühlung über den Rücklauf 38 zur Niedrigtemperatur-Wärmequelle 37 zurückströmt. Dieselbe Niedrigtemperatur-Wärmequelle 37 versorgt außerdem über eine vom Vorlauf 36 abzweigende Zweigleitung 39 mittels der Umlaufpumpe 40 zumindest einen Heizkörper 41, dessen Rücklauf 42 gemeinsam mit dem Rücklauf 38 der im Speicherbehälter 1 angeordneten Heizwendel 2 über ein Dreiwegeventil 43 zur Niedrigtemperatur-Wärmequelle 37 zurückführt.

In der Vorlauf-Zweigleitung 39 ist ein Dreiwegeventil 44 vorgesehen, von dem ein Leitungsstrang 45 als Vorlauf zu einem Wärmetauscher 46 führt, dessen Rücklauf 47 hinter dem Heizkörper 41 in dessen Rücklauf 42 mündet. Dieser Wärmetauscher 46 dient der zeitweisen Entkeimung des vom Speicherbehälter 1 zur Zapfstelle 35 strömenden Brauchwassers.

Hierfür befindet sich dieser Wärmetauscher 46 im Strömungsweg der Zapfleitung 7, und ein Teil dieser Zapfleitung 7 ist ein Abschnitt einer Brauchwasser-Umlaufleitung 48 mit einer eigenen Umlaufpumpe 49 und einem Rückschlagventil 50. Diese Umlaufleitung 48 geht von der Zapfleitung 7 hinter dem Wärmetauscher 46 aus und mündet hinter dem Rückschlagventil 50 in den vom Speicherbehälter 1 zum Wärmetauscher 46 führenden Teil der Zapfleitung 7, also in den Rücklauf 47 des Wärmetauschers 46. Im Wärmetauscher 46 wird das die Zapfleitung 7 durchströmende Wasser auf eine zur Entkeimung ausreichend hohe Temperatur erhitzt.

Zur Steuerung dieser Einrichtung dient eine vorzugsweise im Regler der Niedrigtemperatur-Wärmequelle 37 angeordnete Steuerung 51, die von einem Temperaturfühler 52 des Wärmetauschers 46 und/oder von einem Zeitglied, z. B. einer Schaltuhr 53, beeinflußt wird und über Steuerleitungen 54 mit dem Dreiwegeventil 44 des Vorlaufes 39 des Wasserheizers 37 und über eine Steuerleitung 55 mit der in der Umlaufleitung 48 des Brauchwassers angeordneten Umlaufpumpe 49 verbunden ist.

Aus diesem Aufbau der Einrichtung ergibt sich deren Funktion wie folgt:
Soll zeitweilig eine Entkeimung des der Zapfstelle 35 zuströmenden Wassers und der Zapfleitung 7 durchgeführt werden, wird über die Steuerung 51 und die Steuerleitungen 54 und 55 (oder auch von Hand aus mittels eines willkürlich betätigbaren Schalters) einerseits die Umlaufpumpe 49 in der Brauchwasser-Umlaufleitung 48 gestartet und andererseits das Dreiwegeventil 44 im Vorlauf 39 der Niedrigtemperatur-Wärmequelle 37 in eine Stellung verstellt, bei der der Vorlauf 39 der Niedrigtemperatur-Wärmequelle 37 dem Wärmetauscher 46 zugeführt wird und das diesen Wärmetauscher 46 zur Zapfstelle 35 durchströmende Wasser erhitzt.

Diese Erhitzung kann so lange fortgesetzt werden, bis die Entkeimung weitestgehend durchgeführt ist, und zwar in Abhängigkeit von der mit dem Temperaturfühler 52 gemessenen Temperatur des Brauchwassers und/oder in Abhängigkeit von einer mit dem Zeitglied 53 meßbaren Dauer der Erhitzung.

Ein Rückströmen nicht entkeimten Speicherwassers in die Kaltwasserversorgungsleitung 6 wird durch das Rückschlagventil 34 verhindert.

Nach Beendigung der Entkeimung wird die Umlaufpumpe 49 abgeschaltet und das Dreiwegeventil 44 in jene Stellung zurückverstellt, die den Vorlauf 39 der Niedrigtemperatur-Wärmequelle 37 zum Heizkörper 41 führt.

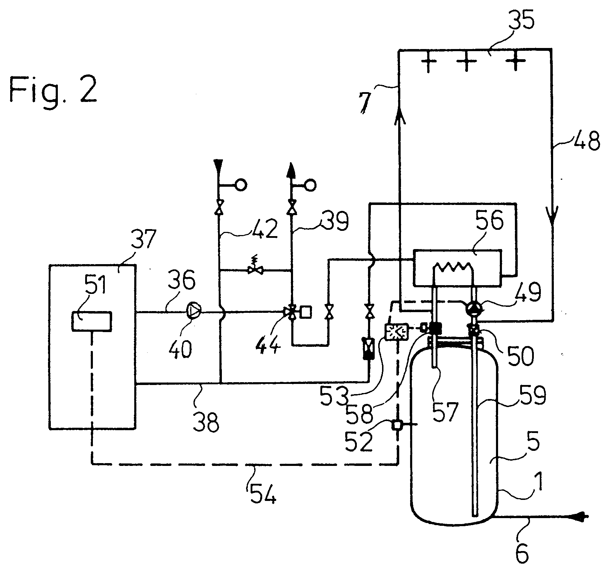

Die Einrichtung nach Figur 2 umfaßt einen sogenannten Schichtenspeicherbehälter 1 mit einem außenliegenden Wärmetauscher 56 und einer warmes Brauchwasser führenden Umlaufleitung 48, die die Zapfstellen 35 enthält. Die Niedrigtemperatur-Wärmequelle 37 versorgt über ihren Vorlauf 36 und ihren Rücklauf 38 den Wärmetauscher 56 des Speicherbehälters 1.

Erfindungsgemäß wird nun dieser Wärmetauscher 56 zur Erhitzung und Entkeimung des aus den Zapfstellen 35 austretenden Brauchwassers und des Brauchwasserumlaufes 48 verwendet, und zwar ist hierzu im Speichervorlauf 57 ein Ventil 58 angeordnet, das mittels eines Zeitgliedes 53 über eine Steuerleitung 54 oder auch mit einem willkürlich von Hand betätigbaren Schalter zeitweise schließbar ist, wobei über die Steuerung 51 gleichzeitig mit dem Schließen des Ventiles 58 auch eine Umlaufpumpe 49 eingeschaltet wird, um einen Umlauf über die Brauchwasserumlaufleitung 48 herbeizuführen. Ein Rückschlagventil 50 im Rücklauf 59 des Speicherbehälter 1 verhindert das Eindringen von Wasser aus dem Brauchwasserumlauf 48 in den Speicherbehälter 1.

Zur zeitweisen Entkeimung des Brauchwasserumlaufes 48 wird der Temperaturfühler 52 des Speicherbehälters 1 temporär elektrisch überbrückt, das Magnetventil 58 im Speichervorlauf 57 geschlossen und die Umlaufpumpe 49 im Speicherrücklauf 59 gestartet.

## Patentansprüche

1. Einrichtung zum Entkeimen von innerhalb einer einen mittels Wärmepumpe(n), Solarzelle(n) oder dergleichen Niedrigtemperatur-Wärmequelle(n) (37) beheizbaren Speicherbehälter (1) aufweisenden Brauchwasseranlage erwärmtem, an zumindest einer Zapfstelle (35) abzugebendem Brauchwasser, wobei in der Zapfleitung (7) ein Wärmetauscher (46, 56) angeordnet ist, der das ihn durchströmende Brauchwasser auf eine zur Entkeimung ausreichend hohe Temperatur beheizt, und wobei der Speicherbehälter (1) und der Wärmetauscher (46, 56) mit von der gleichen Niedrigtemperatur-Wärmequelle (37) erhitztem und in einer eine Umlaufpumpe (40) enthaltenden Umlaufleitung (36, 38) geführtem Wasser beheizbar sind, dadurch gekennzeichnet, daß eine einen Teil der Zapfleitung (7) enthaltende, den Speicherbehälter (1) umgehende weitere Umlaufleitung (48) mit einer Umlaufpumpe (49) vorgesehen ist, die stromab des Wärmetauschers (46, 56) von der Zapfleitung (7) ausgeht und in den vom Speicherbehälter (1) zum Wärmetauscher (46, 56) führenden Abschnitt dieser Zapfleitung (7) mündet.

2. Einrichtung nach Patentanspruch 1, dadurch gekennzeichnet, daß im Vorlauf (36) der Niedrigtemperatur-Wärmequelle (37) ein Dreiwegeventil (44) angeordnet ist, von dem ein Leitungsstrang (45) als Vorlauf zum Wärmetauscher (46) und ein anderer Leitungsstrang (39) als Vorlauf zu mindestens einem Heizkörper (41) führt.

3. Einrichtung nach Patentanspruch 2 dadurch gekennzeichnet, daß eine Steuerung (51) vorgesehen ist, die zeit- und/oder temperaturabhängig die Stellung des Dreiwegeventils (44) steuert.

4. Einrichtung nach Patentanspruch 3, gekennzeichnet durch einen diese Steuerung (51) beeinflussenden, dem Wärmetauscher (46) zugeordneten Temperaturfühler (52) (Figur 1).

5. Einrichtung nach Patentanspruch 1, gekennzeichnet durch ein in einem Vorlauf (57) des Speicherbehälters (1) angeordnetes Ventil (58) zur Zeitweisen Sperre des Vorlaufs (57) und ein in einem Rücklauf (59) des Speicherbehälters (1') angeordnetes Rückschlagventil (50) zur Verhinderung des Eintrittes von Umlauf-Brauchwasser in den Speicherraum (5) (Figur 2).

## Claims

1. An apparatus for sterilizing tap water which has been heated in a tap water heating plant comprising a storage vessel (1), which is heatable by one or more heat pumps, solar cells or one or more similar low-temperature heat sources (37) and which heated tap water is adapted to be tapped at at least one tap (35), wherein the tap line (7) includes a heat exchanger (46, 56), by which the tap water flowing through the heat exchanger is heated to a temperature which is sufficient for sterilization, and wherein the storage vessel (1) and the heat exchanger (46, 56) are adapted to be heated by water which has been heated by the same low-temperature heat source (37) and is conducted in a circulating line (36, 38), which includes a circulating pump (40), characterized in, that an additional circulating line (48) is provided, which comprises a part of the tap line (7) and by-passes the storage vessel (1) and includes a circulating pump (49) and said additional circulating line (48) branches from the tap line (7) downstream of the heat exchanger (46, 56) and opens into that portion of the tap line (7) which extends from the storage vessel (1) to the heat exchanger (46, 56).

2. An apparatus according to claim 1, characterized in that the flow line (36) from the low-temperature heat source (37) includes a three-way valve (44), from which one line (45) leads as a flow line to the heat exchanger (46) and another line (39) leads as a flow line to at least one radiator (41).

3. An apparatus according to Claim 2, characterized in that control means (51) are provided for controlling the position of the three-way valve (44) in dependence on time and/or temperature.

4. An apparatus according to claim 3, characterized by a temperature sensor (52), which is associated with the heat exchanger (46) and influences said control means (51) (Figure 1).

5. An apparatus according to claim 1, characterized by a valve (58), which is included in a flow line (57) from the storage vessel (1) and serves to temporarily close the flow line (57), and a check valve (50), which is included in a return line (59) leading to the storage vessel and serves to prevent an ingress of circulating tap water into the interior space (5) of the storage vessel (Figure 2).

## Revendications

1. Equipement pour la stérilisation d'eau sanitaire chauffée dans une installation comprenant un accumulateur (1) chauffé à l'aide d'une ou de plusieurs thermopompes, cellule(s) solaire(s) ou d'autres sources de chaleur à basse température similaires (37), et munie d'au moins un robinet de prise d'eau (35), le tuyau de prise d'eau (7) étant équipé d'un échangeur de chaleur (46, 56) qui porte l'eau qui y circule à une température suffisamment élevée pour sa stérilisation, et l'accumulateur (1) et l'échangeur de chaleur (46, 56) pouvant être chauffés par l'eau provenant de la même source de chaleur à basse température (37) et circulant dans une conduite (36, 38) comprenant une pompe de circulation (40), caractérisé par le fait qu'il est prévu une autre conduite (48) évitant l'accumulateur (1) et comprenant une partie du tuyau de prise d'eau (7) et qui est munie d'une pompe de circulation (49) et part, en aval de l'échangeur de chaleur (46, 56), dudit tuyau de prise d'eau (7) et débouche dans le tronçon de ce tuyau (7) entre l'accumulateur (1) et l'échangeur de chaleur (46, 56).

2. Equipement suivant la revendication 1, caractérisé par le fait que le tuyau de départ (36) de la source de chaleur à basse température (37) comporte un distributeur 3-voies (44) d'où part une conduite (45) alimentant l'échangeur de chaleur (46), et une autre conduite (39) alimentant au moins un radiateur de chauffage (41).

3. Equipement suivant la revendication 2, caractérisé par le fait qu'il est prévu un dispositif régulateur (51) qui détermine la position du distributeur (44) en fonction du temps et/ou de la température.

4. Equipement suivant la revendication 3, caractérisé par une sonde thermométrique (52) sur l'échangeur de chaleur (46), agissant sur le dispositif régulateur (51) (Fig. 1).

5. Equipement suivant la revendication 1, caractérisé par une valve (58) sur le tuyau de départ (57) de l'accumulateur (1) pour pouvoir boucher momentanément le tuyau (57), et un clapet antiretour (50) sur le tuyau de retour (59) de l'accumulateur (1) pour empêcher la pénétration d'eau en circulation dans l'intérieur (5) de l'accumulateur (Fig. 2).
